# EUROPEAN PATENT APPLICATION

(11) **EP 4 024 308 A1**
(43) Date of publication of application: **06.07.2022**
(21) Application number: 21207609.5
(22) Date of filing: 10.11.2021
(51) Int. Cl.: G06Q 20/30, G06Q 20/38, G06Q 20/40

(54) **ARTIFICIAL INTELLIGENCE BASED METHODS AND SYSTEMS FOR FACILITATING PAYMENT AUTHORIZATIONS IN AUTONOMOUS VEHICLES**

(30) Priority: 05.01.2021 IN 202141000393
(71) Applicant: MasterCard International Incorporated, Purchase, NY 10577-2509 (US)
(72) Inventor: Dhama, Gaurav, 122003 Gurgaon (IN); Wadhwa, Hardik, 125055 Sirsa (IN); Bishnoi, Vikas, 342001 Jodhpur (IN)
(74) Representative: Barker Brettell LLP

(57) **Abstract**

Embodiments provide electronic methods and systems for facilitating payment authorization for payment transactions initiated from an on-board device of an autonomous vehicle. The method performed by a server system includes receiving payment transaction request initiated from on-board device positioned in autonomous vehicle. The payment transaction request includes payment transaction data associated with payment instrument of user. Method includes accessing authentication parameters received from on-board device. Authentication parameters include multisensory data captured using sensors positioned in autonomous vehicle, and generating authentication features based on authentication parameters and neural network models. The neural network models are trained based on historical multisensory data of one or more autonomous vehicles. Method includes determining one or more authentication scores associated with the payment transaction request based on the authentication features and transmitting the one or more authentication scores along with the payment transaction request to issuer associated with the user for authorization.

## Description

### TECHNICAL FIELD

The present disclosure relates to artificial intelligence processing systems and, more particularly to, electronic methods and complex processing systems for facilitating payment authorization for payment transactions initiated from on-board devices (*i.e.,* in-vehicle system) of autonomous vehicles.

### BACKGROUND

Vehicle manufacturers have increased productions of vehicles having higher levels of driving automation. One such example is autonomous/self-driving capable vehicles for transportation (*e.g.,* self-driving or autonomous vehicles). Further, the autonomous vehicles include an in-vehicle system (*e.g.,* infotainment system), one or more on-board components, or modules that connect to other devices, such as a mobile device (*e.g.,* smartphone, PC, computing tablet, wearable computing device, etc.), or cloud-based servers.

Recently, payment transactions have surged significantly in the autonomous vehicles. For example, while riding in an autonomous vehicle, a rider may prefer to watch a movie (*e.g.,* "Harry Potter"), to listen to audio books, or, to order food online from nearby stores. To conduct payment transactions for such services, there exist various traditional methods of conducting payment transactions where the rider needs to be engaged with a mobile phone that can be used to authenticate the payment transactions, or provides payment card information on a user interface of the in-vehicle system and fills out a form for each payment transaction. The complexity of these processes inherently restricts some customers from utilizing some offerings.

As such, the rider may provide at least the payment card details, personal identification number, or biometric data which may be used by an issuer server to authenticate the rider's identity. However, such information may be susceptible to hacking and/or other cybersecurity threats that may be stored at backend services or the in-vehicle system.

Additionally, in a case when the in-vehicle system or the autonomous vehicle is stolen, there is a possibility to make payment transactions using the stored details in the in-vehicle system. Hence, there is a headroom present for improving the payment authentication process for autonomous vehicles such that the issuers can authorize the payment transactions initiated from the in-vehicle system with higher confidence.

Thus, there exists a technological need for a technical solution for facilitating payment authorization in autonomous vehicles using the in-vehicle system in a secure manner.

### SUMMARY

Various embodiments of the present disclosure provide systems and methods facilitating payment authorization for payment transactions initiated from on-board devices (*i.e.,* in-vehicle system) of autonomous vehicles.

In an embodiment, a computer-implemented method is disclosed. The computer-implemented method performed by a server system includes receiving a payment transaction request initiated from an on-board device positioned in an autonomous vehicle. The payment transaction request includes payment transaction data associated with a payment instrument of a user. The computer-implemented method includes accessing a plurality of authentication parameters received from the on-board device and generating a plurality of authentication features based, at least in part, on the plurality of authentication parameters and neural network models. The plurality of authentication parameters includes multisensory data captured using a plurality of sensors positioned in the autonomous vehicle. The neural network models are trained based, at least in part, on historical multisensory data of one or more autonomous vehicles. The computer-implemented method further includes determining one or more authentication scores associated with the payment transaction request based, at least in part, on the plurality of authentication features and transmitting the one or more authentication scores along with the payment transaction request to an issuer associated with the user for authorization of the payment transaction request.

### BRIEF DESCRIPTION OF THE FIGURES

For a more complete understanding of example embodiments of the present technology, reference is now made to the following descriptions taken in connection with the accompanying drawings in which:
FIG. 1 is an example representation of an environment, related to at least some example embodiments of the present disclosure;
FIG. 2 is a simplified block diagram of a server system, in accordance with an embodiment of the present disclosure;
FIG. 3 is a schematic representation of various authentication models with respective authentication parameters as inputs, in accordance with an embodiment of the present disclosure;
FIG. 4 is a flow diagram representing a process flow for training neural network models to generate authentication features, in accordance with an embodiment of the present disclosure;
FIG. 5 is a sequence flow diagram for facilitating the payment authorization for a payment transaction initiated from an autonomous vehicle, in accordance with an embodiment of the present disclosure;
FIG. 6 is a simplified block diagram of a sequential autoencoder, in accordance with an embodiment of the present disclosure;
FIG. 7 is a simplified block diagram of a convolutional autoencoder, in accordance with an embodiment of the present disclosure;
FIG. 8 is a simplified block diagram of an LSTM convolutional autoencoder, in accordance with an embodiment of the present disclosure;
FIG. 9 represents a flow diagram of a computer-implemented method for generating one or more authentication scores for a payment transaction request initiated from an on-board device equipped in an autonomous vehicle, in accordance with an embodiment of the present disclosure;
FIG. 10 is a simplified block diagram of an on-board device with a vehicle control system equipped in an autonomous vehicle, in accordance with an embodiment of the present disclosure;
FIG. 11 is a simplified block diagram of an issuer server, in accordance with an embodiment of the present disclosure; and
FIG. 12 is a simplified block diagram of a payment server, in accordance with an embodiment of the present disclosure.

The drawings referred to in this description are not to be understood as being drawn to scale except if specifically noted, and such drawings are only exemplary in nature.

### DETAILED DESCRIPTION

In the following description, for purposes of explanation, numerous specific details are set forth in order to provide a thorough understanding of the present disclosure. It will be apparent, however, to one skilled in the art that the present disclosure can be practiced without these specific details.

Reference in this specification to "one embodiment" or "an embodiment" means that a particular feature, structure, or characteristic described in connection with the embodiment is included in at least one embodiment of the present disclosure. The appearances of the phrase "in an embodiment" in various places in the specification are not necessarily all referring to the same embodiment, nor are separate or alternative embodiments mutually exclusive of other embodiments. Moreover, various features are described which may be exhibited by some embodiments and not by others. Similarly, various requirements are described which may be requirements for some embodiments but not for other embodiments.

Moreover, although the following description contains many specifics for the purposes of illustration, anyone skilled in the art will appreciate that many variations and/or alterations to said details are within the scope of the present disclosure. Similarly, although many of the features of the present disclosure are described in terms of each other, or in conjunction with each other, one skilled in the art will appreciate that many of these features can be provided independently of other features. Accordingly, this description of the present disclosure is set forth without any loss of generality to, and without imposing limitations upon, the present disclosure.

The term "issuer", used throughout the description, refers to a financial institution normally called as an "issuer bank" or "issuing bank" in which an individual or an institution may have an account. The issuer also issues a payment card, such as a credit card or a debit card, etc. Further, the issuer may also facilitate online banking services such as electronic money transfer, bill payment, etc., to the account holders through a server system called as "issuer server" throughout the description.

The term "payment network", used throughout the description, refers to a network or collection of systems used for the transfer of funds through use of cash-substitutes. Payment networks may use a variety of different protocols and procedures in order to process the transfer of money for various types of transactions. Transactions that may be performed via a payment network may include product or service purchases, credit purchases, debit transactions, fund transfers, account withdrawals, etc. Payment networks may be configured to perform transactions via cash-substitutes, which may include payment cards, letters of credit, checks, financial accounts, etc. Examples of networks or systems configured to perform as payment networks include those operated by such as, Mastercard^{®}.

### OVERVIEW

Various example embodiments of the present disclosure provide methods, systems, user devices, and computer program products for facilitating payment authorization for payment transactions in autonomous vehicles. The payment transactions may be initiated from an on-board device (*e.g.,* a vehicle infotainment system) positioned in an autonomous vehicle, where the on-board device may not be connected with a mobile phone of a user. More specifically, various embodiments as disclosed herein enable users/riders, to provide an option to pay for goods and services by only using the on-board device of the autonomous vehicle. To authenticate such payment transactions, a lot of auxiliary information (*i.e.,* multisensory data) available with the on-board device is utilized to improve confidence in payment authorization decision to approve/decline payment transactions.

In various example embodiments, the present disclosure describes a server system that is configured to authenticate a payment transaction initiated from an on-board device of an autonomous vehicle. In one example, the server system is a payment server associated with a payment network. The server system is configured to receive a payment transaction request initiated from the on-board device positioned in the autonomous vehicle. The payment transaction request includes, but is not limited to, payment transaction data associated with a payment instrument (*i.e.,* payment account, payment card, payment wallet, etc.) of a user. In one embodiment, the user may provide an input in a form of voice, tactile feedback, or by entering a secure password on a touch-screen display of the on-board device to initiate the payment transaction.

In one embodiment, the server system may receive multisensory data from the on-board device that is captured using a plurality of sensors and cameras at pre-defined time intervals after the beginning of a current trip. The pre-defined time intervals may be set by the server system or by a fleet manager. During the current trip, the autonomous vehicle may be operated either in a manual driving mode, or self-driving mode. In one embodiment, the on-board device may not send multisensory data corresponding to the user when the autonomous vehicle is operated in the self-driving mode.

Upon reception of the payment transaction request, the server system is configured to access a plurality of authentication parameters received from the on-board device. The plurality of authentication parameters includes, but is not limited to, multisensory data captured using the plurality of sensors and cameras positioned in the autonomous vehicle. In particular, the plurality of authentication parameters may be captured by the on-board device at one or more time instances within a particular time duration (for example, last one hour). The plurality of authentication parameters may include, but are not limited to, engine sound profile data, vehicle vibration data, touch-screen usage pattern, steering operation patterns, vehicle location data, speedometer data, on-board camera input, on-board LIDAR input, on-board ultrasonic input, etc.

In one embodiment, the server system is configured to generate a plurality of authentication features based, at least in part, on the plurality of authentication parameters, neural network models, and audio and location featurizing models. More particularly, the server system may determine latent space representations of the plurality of authentication parameters associated with each time instance. The audio featurizing model is configured to extract audio features from the engine sound profile data of the autonomous vehicle. The location featurizing model is configured to determine an anomaly in the vehicle location data based at least on Haversine distance function.

Thus, the location featurizing model helps in identifying anomalous locations based on a location history of driving the autonomous vehicle. If the payment transaction is taking place in an area where the user or the rider has not gone before, it means that the car has been stolen. In one embodiment, the neural network models include a plurality of autoencoders trained based on historical multisensory data of one or more autonomous vehicles captured during past trips. In one embodiment, the server system is configured to generate a latent space vector associated with the vehicle vibration data by applying a sequential autoencoder of the plurality of autoencoders over the vehicle vibration data associated with each time instance. In one embodiment, the server system is configured to generate a latent space vector associated with the touch-screen usage pattern by applying a convolutional autoencoder of the plurality of autoencoders over the touch-screen usage pattern data.

In one embodiment, the server system may generate recent authentication templates based on the plurality of authentication features created at the one or more time instances. An authentication template indicates a combination of vehicular profile data, on-board device profile data, and user profile data. In at least one embodiment, the server system may assign weight values to the recent authentication templates associated with one or more time instances. The highest weight value is assigned to the most recent authentication template. In other words, a weight value corresponding to a recent authentication template created at a particular time instance is inversely proportional to a difference between the particular time instance and timestamp of initiating the payment transaction request.

Thereafter, the server system is configured to determine one or more authentication scores associated with the payment transaction based, at least in part, on the plurality of authentication features. The one or more authentication scores include a first authentication score associated with a vehicular profile, a second authentication score associated with an on-board device profile, and a third authentication score associated with a user profile. In one embodiment, the server system is configured to match at least one recent authentication template from the recent authentication templates with a past authentication template associated with the autonomous vehicle stored in a database.

In one embodiment, the server system may generate the one or more authentication scores based on the match and a weight value associated with the at least one recent authentication template. Then, the server system is configured to transmit the payment transaction request and the one or more authentication scores to an issuer associated with the user for payment authorization of the payment transaction request. The issuer may classify the payment transaction request into approving or declining based at least on the one or more authentication scores and transactional features (such as, transaction velocity, spend velocity, etc.).

Various embodiments of the present disclosure offer multiple advantages and technical effects. For instance, the present disclosure enables users/customers to perform payment transactions for goods and services consumed by vehicle infotainment system itself using voice authentication, tactile feedback, etc. without interacting with his/her smartphone. The present disclosure utilizes various auxiliary data available with the vehicle infotainment system of the autonomous vehicles for identity verification and payment authentication in very convenient manner. The present disclosure provides an improved payment authentication system for autonomous vehicles by utilizing various multisensory data of the autonomous vehicle as authentication parameters to ascertain identity of the user and the autonomous vehicle so that losses due to fraud can be minimized. The present disclosure also allows the issuer server to authorize payment transactions using authentication scores provided by the server system with higher confidence.

Further, the present disclosure provides significantly more robust solutions because of handling simultaneous/concurrent processor execution (such as applying one or more neural network models over the authentication parameters, simulatenously).The present disclosure utilizes various neural network models to convert authentication parameters in different formats to a suitable form for consumption into a classification models, thereby improving authorization decisions. In addition, there is no need to install any hardware sensors in the autonomous vehicles since most of the sensors and cameras are already present in recent autonomous vehicles.

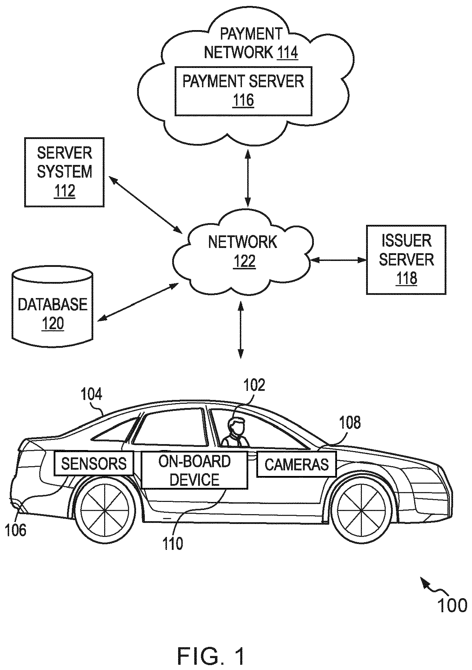

Various example embodiments of the present disclosure are described hereinafter with reference to FIGS. 1 to 12.

FIG. 1 illustrates an exemplary representation of an environment 100 related to at least some example embodiments of the present disclosure. Although the environment 100 is presented in one arrangement, other embodiments may include the parts of the environment 100 (or other parts) arranged otherwise depending on, for example, performing payment transactions by utilizing an on-board device (*i.e.,* infotainment system) equipped in an autonomous vehicle on behalf of an owner/driver. Further, the autonomous vehicle is a self-driving car, or a driverless car that is capable of sensing its environment and moving safely with little or no human intervention. The environment 100 generally includes a user 102 (hereinafter interchangeably referred to as "driver 102") associated with an autonomous vehicle 104 (exemplary depicted to be a car), a server system 112, a payment network 114 including a payment server 116, an issuer server 118, and a database 120 each connected to, and in communication with (and/or with access to) a network 122. The network 122 may include, without limitation, a light fidelity (Li-Fi) network, a local area network (LAN), a wide area network (WAN), a metropolitan area network (MAN), a satellite network, the Internet, a fiber optic network, a coaxial cable network, an infrared (IR) network, a radio frequency (RF) network, a virtual network, and/or another suitable public and/or private network capable of supporting communication among the entities illustrated in FIG. 1, or any combination thereof.

Various entities in the environment 100 may connect to the network 122 in accordance with various wired and wireless communication protocols, such as, Transmission Control Protocol and Internet Protocol (TCP/IP), User Datagram Protocol (UDP), 2^{nd} Generation (2G), 3^{rd} Generation (3G), 4^{th} Generation (4G), 5^{th} Generation (5G) communication protocols, Long Term Evolution (LTE) communication protocols, or any combination thereof. The network 122 may include, without limitation, a local area network (LAN), a wide area network (WAN) (*e.g.,* the Internet), a mobile network, a virtual network, and/or another suitable public and/or private network capable of supporting communication among two or more of the entities illustrated in FIG. 1, or any combination thereof. For example, the network 122 may include multiple different networks, such as a private network made accessible by the payment network 114 to the issuer server 118 and the database 120 and separately, a public network (*e.g.,* the Internet) through which the server system 112, the payment server 116, the issuer server 118, and the database 120 may communicate.

The autonomous vehicle 104 includes, but is not limited to, sensors 106, cameras 108 (*e.g.,* independent, stereo, combined image, etc.) and an on-board device 110. Examples of the sensors 106 may include, but are in no way limited to, infrared (IR) sensors, radio frequency (RF) sensors, ultrasonic sensors (*e.g.,* transducers, transceivers, etc.), RADAR sensors (*e.g.,* object-detection sensors and/or systems), LIDAR systems, odometry sensors and/or devices (*e.g.,* encoders, etc.), orientation sensors (*e.g.,* accelerometers, gyroscopes, magnetometer, etc.), navigation sensors and systems (*e.g.,* GPS, etc.), and other ranging, imaging, and/or object-detecting sensors. The sensors 106 may be disposed in an interior space of the autonomous vehicle 104 and/or on an outside of the autonomous vehicle 104. In some embodiments, the sensors 106 may be disposed in one or more portions of the autonomous vehicle 104 (*e.g.,* a frame, a body panel, a compartment, etc.). In any event, the sensors 106 and the cameras 108 may be used to provide driving assistance at levels of operations (*e.g.,* from fully-manual to fully-autonomous operations, etc.).

In one embodiment, the autonomous vehicle 104 is configured to connect to servers outside the autonomous vehicle 104. The autonomous vehicle 104 may also be able to communicate with other vehicles. The autonomous vehicle 104 may be a conventionally driven car or feature autonomous and/or automatic driving.

In one embodiment, the user 102 may check into the autonomous vehicle 104 (such as via BLE, LTE Direct, etc.) through the on-board device 110 with a user account. The autonomous vehicle 104 may be a connected car that contains an in-vehicle system, such as an infotainment system. The on-board device or the vehicle infotainment system 110 is enabled with touch-screen technology. In existing systems, in order to perform payment transactions through the on-board device 110, it is required to connect the on-board device 110 with a smartphone of the user 102. Then, the user 102 also needs to provide some security information over the smartphone or the on-board device 110 for authenticating the payment transaction.

To make the on-board device 110 as a standalone entity for performing payment transactions, the on-board device 110 is registered with the user account of a payment service that allows the users to pay for goods/services through the on-board device 110 using voice authentication, tactile feedback or by entering a secured password on a touch-screen of the on-board device 110. The user account may be associated with a payment instrument (such as, payment card, payment wallet, payment account) of the user 102. The on-board device 110 may have access to the on-board GPS/navigation system and the onboard system diagnostics and status, which monitors vehicle information such as engine sound profile data, and vehicle location data. The on-board device 110 may be installed with an onboard application of a third-party service provider that is compatible with the services of the payment service provider. In one embodiment, one or more users are registered with the on-board device 110 for payment services.

In one embodiment, the user account may be an account maintained by a payment service provider. The user account maintained by the payment provider server may be a funded account that a user can use to make payments. In one embodiment, the on-board device 110 is installed with an on-board application configured to process payment transactions and provides payment transaction requests to the issuer server 118 along with a plurality of authentication parameters, thereby providing auxiliary authentication information to issuers for taking payment authorizing decisions efficiently.

In one embodiment, the on-board device 110 is configured to receive multisensory data from the sensors 106 and the cameras 108 of the autonomous vehicle 104 at predefined time-intervals in a current trip. The multisensory data is utilized as a plurality of authentication parameters to authenticate the payment transactions initiated from the on-board device 110.

More illustratively, the on-board device 110 is utilized as an authentication device in different payment transactions. The sensors 106 positioned in the autonomous vehicle 104 may detect various data corresponding to the autonomous vehicle 104, the on-board device 110, and/or the user 102. The detected data may then be communicated to the server system 112 for analysis and comparison with data stored at a database 120.

The server system 112 may be configured to perform one or more of the operations described herein. In general, the server system 112 may be configured to determine one or more authentication scores of the payment transaction based at least on a plurality of profiles. The profiles may correspond to at least the driver 102, the autonomous vehicle 104, and the on-board device 110 of the autonomous vehicle 104 (as shown in FIG. 1). The server system 112 is a separate part of the environment 100, and may operate apart from (but still in communication with, for example, via the network 122) the issuer server 118, the acquirer server, the payment server 116 and any third party external servers (to access data to perform the various operations described herein). However, in other embodiments, the server system 112 may actually be incorporated, in whole or in part, into one or more parts of the environment 100, for example, the payment server 116 or the issuer server 118. In addition, the server system 112 should be understood to be embodied in at least one computing device in communication with the network 122, which may be specifically configured, via executable instructions, to perform as described herein, and/or embodied in at least one non-transitory computer readable media.

In one embodiment, the issuer server 118 is associated with a financial institution normally called as an "issuer bank" or "issuing bank" or simply "issuer", in which the user 102 may have a payment account, (which also issues a payment card, such as a credit card or a debit card), and provides micro-finance banking services (*e.g.,* payment transaction using credit/debit cards) for processing electronic payment transactions, to the user 102.

In one embodiment, the payment server 116 associated with the payment network 114 is shown. The payment network 114 may be used by the payment cards issuing authorities as a payment interchange network. Examples of payment interchange network include, but not limited to, Mastercard^{®} payment system interchange network. The Mastercard^{®} payment system interchange network is a proprietary communications standard promulgated by Mastercard International Incorporated^{®} for the exchange of financial transaction data between financial institutions that are members of Mastercard International Incorporated^{®}. (Mastercard is a registered trademark of Mastercard International Incorporated located in Purchase, N.Y.).

In one example, assuming, the user 102 wants to process a payment transaction to a gas station during a trip without using or connecting his mobile phone to the on-board device 110 of the autonomous vehicle 104. Since the autonomous vehicle 104 can be operated either in self-driving mode or in manual driving mode. In case if the autonomous vehicle 104 is operated in the self-driving mode, it is required to verify the identity of the on-board device 110 and the autonomous vehicle 104. In case if the autonomous vehicle 104 is operated in manual driving mode, the on-board device 110, the autonomous vehicle 104, and driving monitoring data of the user 102 need to be verified.

In the illustrative embodiment, the user 102 associated with the autonomous vehicle 104 may perform a payment transaction by providing inputs (such as, voice, tactile feedback on the touch-screen, etc.) on the on-board device 110 of the autonomous vehicle 104. For example, the on-board device 110 of the autonomous vehicle 104 may be used as a point-of-sale terminal to perform the payment transaction with at least the retailers, gas stations, or in parking services and the like. In an example embodiment, the user 102 may have to register or enroll to the server system 112 using a website, for using the on-board device 110 equipped in the autonomous vehicle 104 to perform payment transactions. Once the user 102 is registered, he/she may make payment transactions using the on-board device 110 of the autonomous vehicle 104.

In one embodiment, the server system 112 is configured to perform one or more of the operations described herein. In general, the server system 112 is configured to generate one or more authentication scores that may be sent to an issuer server to take a decision whether to authenticate the payment transaction initiated by the user 102 or not. The one or more authentication scores are generated using a plurality of latent space representations. The one or more authentication scores may correspond to the user 102, the on-board device 110 from which the payment transaction is initiated, and the autonomous vehicle 104 to which the on-board device 110 belongs. Authenticating all the three factors makes the payment transactions more secure and since the user 102 does not have to provide any extra input for authentication purposes, it also serves as effortless and user-friendly to the user 102. As such, the server system 112 may be associated with a database 120 which maintains various profiles corresponding to the details related to the user 102, the autonomous vehicle 104, and the on-board device 110.

As mentioned above, the server system 112 is configured to calculate one or more authentication scores for a particular payment transaction initiated from the on-board device 110 of the autonomous vehicle 104. Thereafter, the one or more authentication scores may be sent to the issuer server 118 along with the payment transaction request, to seek permission for approval or declining the payment transaction based on the authorization scores. The issuer server 118 may include a classification model to classify the payment transactions into approval or decline.

In some embodiments, the server system 112 may be, as a whole incorporated in the issuer server 118 or payment server 116. When the server system 112 is incorporated in the issuer server 118, the issuer server 118 may not calculate authentication scores, or contain any classification model, and the issuer server 118 would approve or decline the payment transaction request based on the match between the most recently generated authentication features and the previously stored authentication features. In an alternate embodiment, where the server system 112 is incorporated in the payment server 116, the payment server may be configured to calculate one or more authentication scores and send them to the issuer server 118 along with the payment transaction request. The issuer server 118 is configured to decline or approve the payment transaction request based on the one or more authentication scores using a classification model included in the issuer server 118.

The number and arrangement of systems, devices, and/or networks shown in FIG. 1 are provided as an example. There may be additional systems, devices, and/or networks; fewer systems, devices, and/or networks; different systems, devices, and/or networks, and/or differently arranged systems, devices, and/or networks than those shown in FIG. 1. Furthermore, two or more systems or devices shown in FIG. 1 may be implemented within a single system or device, or a single system or device shown in FIG. 1 may be implemented as multiple, distributed systems or devices. Additionally, or alternatively, a set of systems (*e.g.,* one or more systems) or a set of devices (*e.g.,* one or more devices) of the environment 100 may perform one or more functions described as being performed by another set of systems or another set of devices of the environment 100.

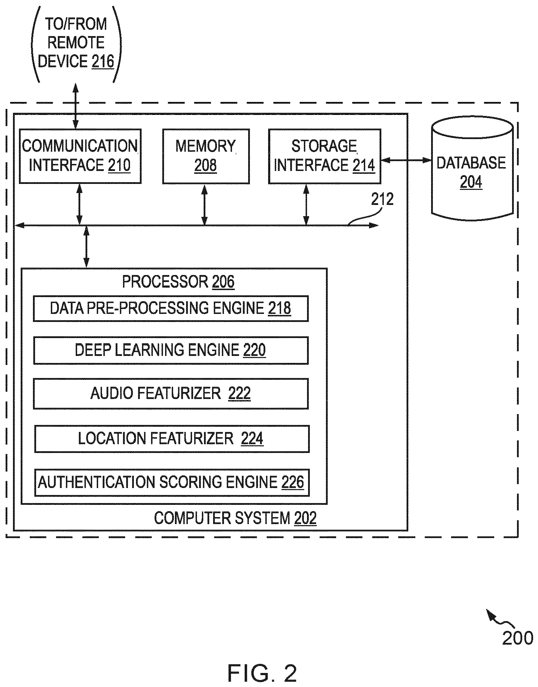

Referring now to FIG. 2, a simplified block diagram of a server system 200, is shown, in accordance with an embodiment of the present disclosure. For example, the server system 200 is similar to the server system 112 as described in FIG. 1. In some embodiments, the server system 200 is embodied as a cloud-based and/or SaaS-based (software as a service) architecture. In one embodiment, the server system 200 includes a computer system 202 and a database 204. The computer system 202 includes at least one processor 206 for executing instructions, a memory 208, and a communication interface 210. The one or more components of the computer system 202 communicate with each other via a bus 212.

In one embodiment, the database 204 is integrated within the computer system 202. For example, the computer system 202 may include one or more hard disk drives as the database 204. A storage interface 214 is any component capable of providing the processor 206 with access to the database 204. The storage interface 214 may include, for example, an Advanced Technology Attachment (ATA) adapter, a Serial ATA (SATA) adapter, a Small Computer System Interface (SCSI) adapter, a RAID controller, a SAN adapter, a network adapter, and/or any component providing the processor 206 with access to the database 204. In one embodiment, the database 204 is configured to store at least trained neural network models, an audio featurizing model, and a location featurizing model.

The processor 206 includes suitable logic, circuitry, and/or interfaces to execute computer-readable instructions for providing one or more authentication scores associated with the user 102, the on-board device (*e.g.,* vehicle infotainment system) 110, and the autonomous vehicle 104 upon receiving the payment transaction, to the issuer server 118. Examples of the processor 206 include, but are not limited to, an application-specific integrated circuit (ASIC) processor, a reduced instruction set computing (RISC) processor, a complex instruction set computing (CISC) processor, a field-programmable gate array (FPGA), and the like. The memory 208 includes suitable logic, circuitry, and/or interfaces to store a set of computer-readable instructions for performing operations. Examples of the memory 208 include a random-access memory (RAM), a read-only memory (ROM), a removable storage drive, a hard disk drive (HDD), and the like. It will be apparent to a person skilled in the art that the scope of the disclosure is not limited to realizing the memory 208 in the server system 200, as described herein. In some embodiments, the memory 208 may be realized in the form of a database server or a cloud storage working in conjunction with the server system 200, without deviating from the scope of the present disclosure.

The processor 206 is operatively coupled to the communication interface 210 such that the processor 206 is capable of communicating with a remote device 216 such as, the issuer server 118, payment server 116, and the on-board device 110 positioned in the autonomous vehicle 104 or with any entity connected to the network 122 (*e.g.,* as shown in FIG. 1).

It is noted that the server system 200 as illustrated and hereinafter described is merely illustrative of an apparatus that could benefit from embodiments of the present disclosure and, therefore, should not be taken to limit the scope of the present disclosure. It is noted that the server system 200 may include fewer or more components than those depicted in FIG. 2.

In one embodiment, the processor 206 includes a data pre-processing engine 218, a deep learning engine 220, an audio featurizer 222, a location featurizer 224, and an authentication scoring engine 226. It should be noted that the components, described herein, can be configured in a variety of ways, including electronic circuitries, digital arithmetic and logic blocks, and memory systems in combination with software, firmware, and embedded technologies.

In one embodiment, the data pre-processing engine 218 includes suitable logic and/or interfaces for receiving multisensory data from the on-board device 110 at predefined time-intervals after the beginning of a current trip. The multisensory data may include, but not limited to, engine sound profile data, vehicle vibration data, touch screen usage patterns, steering operation patterns, vehicle location, speedometer history of the vehicle, on-board camera input, on-board light ranging and detection (LIDAR) inputs, and on-board infrared (IR) inputs. The multisensory data captured at the pre-defined time intervals is utilized for training neural network models. The pre-defined time intervals may be set by the server system 200 or by a fleet manager. The data pre-processing engine 218 is further configured to generate input vectors associated with the multisensory data. For example, the speedometer data may be passed through the data pre-processing engine 218 to obtain input vectors and then, the input vectors related to the speedometer data may be passed through a sequential autoencoder to get the latent representation. Similarly, each of the multisensory data may be passed through the data pre-processing engine 218 to obtain input vectors corresponding to the values of the multisensory data.

Since the values corresponding to the multisensory data are of different metrics and units, the data pre-processing engine 218 is configured to use respective methods to generate input vectors that are suitable to be fed to the deep learning engine 220, the audio featurizer 222, and the location featurizer 224.

The multisensory data is referred to as a plurality of authentication parameters which is utilized for payment authentication. Each authentication parameter is responsible for authenticating the autonomous vehicle 104, the on-board device 110, and/or the user 102 (if the user is driving the autonomous vehicle 104). Based on the multisensory data captured at the predefined time intervals, vehicular profile, on-board device profile and user profile are generated. In other words, an authentication template at each pre-defined time-interval is created based on the vehicular profile, on-board device profile and the user profile.

For example, the engine sound profile data, the vehicle vibration data, and the vehicle location data are used to generate the vehicular profile associated with the autonomous vehicle 104. In another example, when the user 102 is driving the autonomous vehicle 104, the user profile is generated based on the touch-screen usage pattern, steering operations pattern, speedometer history, on-board camera input, on-board LIDAR input, and/or on-board IR input.

In one example, assuming, a person starts a trip at time T=T0 in a vehicle operating in a self-driving mode. An on-board device positioned in the vehicle captures multisensory data from the sensors at times T3, T6, and T9 with a predefined time interval and transmits the multisensory data associated with the vehicle to the server system 200. The multisensory data may include, but not limited to, engine sound profile data, vehicle vibration data, and vehicle location data.

In one embodiment, the processor 206 is configured to receive a payment transaction request initiated from the on-board device 110 of the autonomous vehicle 104. The payment transaction request includes, but is not limited to, payment transaction data associated with a payment instrument (*e.g.,* payment account, payment card, payment wallet, etc.) of the user 102. The payment transaction data may include, but are not limited to, payment transaction amount, payment transaction time, receiver identifier, user identifier, etc. After reception of the payment transaction request, the processor 206 is also configured to access a plurality of authentication parameters from the on-board device 110 of the autonomous vehicle 104. The plurality of authentication parameters includes, but is not limited to, multisensory data captured using the sensors 106 and the cameras 108 positioned in the autonomous vehicle 104 at one or more time instances within a particular time duration (such as, last one hour) from a time of initiating the payment transaction request using the on-board device 110.

The deep learning engine 220, the audio featurizer 222 and the location featurizer 224 include suitable logic and/or interfaces for generating a plurality of authentication features based, at least in part, on the plurality of authentication parameters. In particular, the processor 206 is configured to determine latent space representations in the similar format of the plurality of authentication parameters associated with each time instance.

In one embodiment, the audio featurizer 222 and the location featurizer 224 are also configured to convert engine sound profile data and the location data, respectively, into the latent space representations. More particularly, the deep learning engine 220 is configured to determine latent space representations of a set of authentication parameters. The set of authentication parameters is a subset of the plurality of authentication parameters excluding engine sound profile data and vehicle location data.

The deep learning engine 220 may include neural network models associated with a plurality of autoencoders that is trained to generate the latent space representations associated with the set of authentication parameters. The plurality of autoencoders may be trained based on historical multisensory data of one or more autonomous vehicles that were captured in previous trips. In an embodiment, different autoencoders are used to generate latent representations of the different authentication parameters. The plurality of autoencoders may be a sequential autoencoder (AE), a convolutional AE, a Long-Short term memory (LSTM) convolutional AE, an LSTM 3D convolutional AE, a 2D convolutional AE, and the like.

Each of the various autoencoders may be designed and trained to take suitable input vectors and provide latent space representations as outputs. For example, the vehicle vibration data may be passed through the data pre-processing engine 218 to obtain input vectors and then the input vectors related to the vehicle vibration data may be passed through a sequential autoencoder to get the latent representation. Similarly, each of the plurality of authentication parameters may be passed through an autoencoder to obtain a corresponding latent space representation. The latent space representations of authentication parameters are referred to as "authentication features" interchangeably throughout the description.

The sequential autoencoders are configured to extract latent space vectors from at least the vehicle vibration data, the steering operation patterns, and the speedometer data. As such, the sequential autoencoders may include one or more neural network models which is trained based on standards of vibration data of a particular type of autonomous vehicle (such as the autonomous vehicle 104), steering operation patterns data which includes pressure on steering wheel and velocity of rotation during turns performed by the user 102, and speedometer data of the autonomous vehicle 104 when driven by the user 102.

The convolutional autoencoder is configured to generate a latent space vector from the touch-screen usage pattern (*i.e.,* usage of the touch panel of on-board device 110 of the autonomous vehicle 104 by the user 102).

The long short term memory (LSTM) convolutional autoencoder is configured to detect anomalies in the driving pattern when the autonomous vehicle 104 is used in a manual mode. In general, the driving pattern corresponds to data related to changing of lanes, taking turns, and the like by the driver who is driving the autonomous vehicle 104. More specifically, the LSTM convolutional AE includes neural network models that are trained based at least on a sequence of images corresponding to the driving style of the driver (such as the user 102).

The audio featurizer 222 includes a suitable logic and/or interfaces for generating the latent audio features corresponding to the engine sound profile data of the autonomous vehicle 104 received at predefined time intervals. More particularly, the audio featurizer 222 may implement an audio featurizing model (*e.g.,* pyAudio Analysis, Librosa python library) to extract audio features from the engine sound profile data of the autonomous vehicle 104. The processor 206 is configured to perform operations such as, audio and time-series operations, time and frequency conversion, spectrogram calculation, etc. over the engine sound signals.

In an example embodiment, the audio featurizer 222 is configured to create audio features for each trip taken by the user 102 in the autonomous vehicle 104 by creating a sonogram of an audio signal (*i.e.,* engine sound signal) and the wave plot. The sonogram of the audio signal is created using an algorithm knows as the fast Fourier transform (FFT). The FFT is an algorithm that registers the discrete Fourier change (DFT) of a sequence, or its converse (IDFT). In one embodiment, Hamming window function is utilized during the FFT computation. Fourier investigation changes over a signal from its original domain (generally time or space) to a representation in the frequency domain and the other way around. In this example, the audio signals from the audio featurizer 222 may be recorded and converted into time and space form using the FFT to create a sonogram or the wave plot of the audio signals. Further, using the software tools, latent audio features may be extracted from the sonograms and wave plots.

In one non-limiting example, the latent features extracted by the audio featurizer 222 corresponding to the engine sound data are entropy of energy, spectral centroid, spectral roll off, spectral bandwidth, spectral flux, zero crossing rate, flatness, Mel-frequency cepstral coefficients, and the like.

The spectral centroid feature indicates where the center of mass for the engine sound data is located and is calculated as a weigthed mean of frequencies present in the engine sound data.

The spectral roll-off feature represents a measure of the shape of the engine sound signal. It represents a frequency below which a specified percentage of the total spectral energy of the engine sound signal lies. The spectral flux indicates how quickly the spectrum of the engine sound signal is changing. The zero crossing rate represents an autocorrelation at lag 1 of the engine sound signal. The flatness feature depicts nature (for example, noise versus sinosoduality) of the engine sound signal. The Mel-frequency cepstral coefficients feature of the engine sound signal is a small set of features which concisely describe overall shape of a spectral envelope. It provides a rough model of human frequency perception.

The location featurizer 224 is configured to determine an anomaly (*i.e.,* authentication feature) associated with the vehicle location data based at least on a location featurizing model. The location featurizer 224 is configured to calculate a distance (such as Haversine distance) between two location points, such as an older location of the autonomous vehicle 104 and a recent location of the autonomous vehicle 104. The location featurizing model implements a Haversine distance function that is used to calculate the shortest distance between any two location points on a sphere using their latitudes and longitudes measured along the surface of the sphere.

The location featurizer 224 is configured to calculate a mode of received current vehicle location data of the autonomous vehicle 104. The calculation of distance using the Haversine distance function results in identifying anomalous locations trajectories based at least on the previous location data and recent location data of the autonomous vehicle 104. For instance, the vehicle location data may be utilized to identify an anomaly if the payment transaction is taking place in an area where the actual owner (such as the user 102) has not gone before; it means that the car has been stolen.

Thus, the plurality of authentication features is generated by the deep learning engine 220, audio featurizer 222, and the location featurizer 224 from the plurality of authentication parameters.

In one embodiment, the latent features extracted from the plurality of authentication parameters at the predefined time-intervals are utilized for generating authentication templates for the current trip. The authentication templates include vehicular profile data, on-board device profile data and user profile data in the latent representations at the predefined time-intervals. In other words, the extracted latent features are concatenated by a feature concatenation process. More illustratively, the processor 206 is configured to concatenate latent feature vectors of the plurality of authentication parameters to generate an authentication template.

In an example, the concatenation may be facilitated by performing an array attachment task, which is a simple attachment of an array including various authentication features in the same latent space representation. In another embodiment, the concatenation may be performed based on a type of authentication feature, for example, authentication features required for authenticating the autonomous vehicle 104 may be concatenated separately, the authentication features required for authenticating the user 102 may be concatenated separately, and the authentication features required for authenticating of the on-board device 110 may be concatenated separately. This is done to get different authentication scores regarding the user 102, the autonomous vehicle 104, and the on-board device 110.

Additionally, the processor 206 is configured to store the authentication templates into the database 204 generated at the predefined time intervals during the trip. In particular, the processor 206 is configured to model and store the vehicular profile, the on-board device profile, and the user profile based on the authentication templates, in the database 204.

The authentication scoring engine 226 includes a suitable logic and/or interfaces for determining one or more authentication scores associated with the payment transaction request based on the plurality of authentication features. The plurality of authentication features is associated with a plurality of authentication parameters captured within a particular time duration (for example, last one hour). Based on the plurality of authentication features associated with the particular time duration, the processor 206 is configured to generate one or more recent authentication templates. Each recent authentication template of the one or more recent authentication templates is weighted based on a weight value. The weight value is inversely proportional to a time of the difference between a time when authentication parameters associated with a recent authentication template are received from the on-board device 110 and a time of initiating payment transaction request by the on-board device. Thus, the higher weights are provided to those authentication templates which are associated with the more recent time-interval. In particular, the authentication scoring engine 226 is configured to match past authentication templates of the autonomous vehicle 104 stored in the database 204 with one or more recent authentication templates.

In one example, a user starts a trip using a self-driving car in an auto-pilot mode. The server system 200 receives a plurality of authentication parameters from the self-driving car at pre-defined time intervals (*e.g.,* for every 1 hour) from the beginning of the trip. As such, the pre-defined time interval may be set by an administrator and/or fixed in the self-driving car. The server system 200 generates a plurality of authentication features at the predefined time intervals and determines an authentication template for each predefined time interval based on the plurality of authentication features associated with each predefined time interval. After some point of time, the user initiates a payment transaction via an on-board device by providing inputs in the form of voice, or tactile feedback on touch-screen of the on-board device. For payment authentication, the server system 200 accesses all the recent authentication templates generated in the last one hour. The server system 200 also assigns a weight value to each recent authentication template of all the authentication templates based on recency. In other words, the most recent authentication template will get the highest weight value. All the recent authentication templates are matched with earlier authentication templates stored in the database and an authentication score is generated based on the match and weight values assigned to all the authentication templates.

In one embodiment, the plurality of authentication features corresponding to the user 102, the autonomous vehicle 104, and the on-board device 110 are utilized by the server system 200 to create an identity such as the user profile, the vehicular profile, and the on-board device profile, respectively. More specifically, authentication features extracted from authentication parameters, such as, the touch-screen usage pattern, the steering operation pattern, the speedometer data, the on-board camera input data, the on-board LIDAR input data, and the on-board IR sensor input data which correspond to user 102 result in creation of the user profile. Further, the authentication features extracted from the authentication parameters, such as, the engine sound profile data, the vehicle vibration data, and the vehicle location data that correspond to the autonomous vehicle 104, result in creation of vehicular-profile and the on-board device profile.

The authentication scoring engine 226 is configured to calculate one or more authentication scores upon receiving the payment transaction request initiated by the user 102 via the on-board device 110 of the autonomous vehicle 104. More specifically, the authentication scoring engine 226 calculates the one or more authentication scores based on matching past authentication templates associated with the autonomous vehicle 104 stored in the database 204 (generated based on past authentication features generated during the current or previous trips) with a recent authentication template (generated based on the recent authentication features (*e.g.,* last 1 hour data)). The one or more authentication scores includes a first authentication score associated with the vehicular profile, a second authentication score associated with the on-board device profile, and a third authentication score associated with the user-profile.

In one example, the authentication scoring engine 226 calculates an individual authentication score (such as user-specific score, autonomous-vehicle specific score, and on-board device specific score) by determining an anomaly between the recent authentication features and the past authentication features..

In an example, if the autonomous vehicle 104 is in autopilot mode without the intervention of the user 102, the authentication scores (such as the vehicle-specific and the on-board device specific) may be generated which will confirm the identity of the autonomous vehicle 104 and the on-board device 110..

In general, the one or more authentication scores provide confidence about the identity of the user 102, the autonomous vehicle 104, and the on-board device 110. In one scenario, if an authentication score associated with the user generated by the server system 200 is greater than a threshold value or equal to the threshold value, it confirms that the payment transaction request is initiated from an authentic user using the authentic on-board device 110 which is associated with the authentic autonomous vehicle 104.

The authentication scoring engine 226 transmits the payment transaction request along with the one or more authentication scores to the issuer server 118 to make a decision whether to approve the payment transaction or not. Thus, the server system 200 routes the payment transaction request along with the corresponding authentication scores to the issuer server 118 for processing the payment transaction.

In one embodiment, since the deep learning engine 220 includes neural network models which use a learning-driven technique, it is possible to incrementally update the neural network models (*e.g.,* from feedback provided by a human or computer administrator) so that they can adapt for calculating the authentication scores based on receipt of the payment transaction request from the autonomous vehicle 104 based on user inputs on the on-board device 110. To do so, the neural network models incrementally update their probability distribution weights during a detection phase. In this regard, the neural network models can initially be trained using the training data and then later tuned/refined using feedback. Further, this feedback may be incorporated immediately in a dynamic online manner.

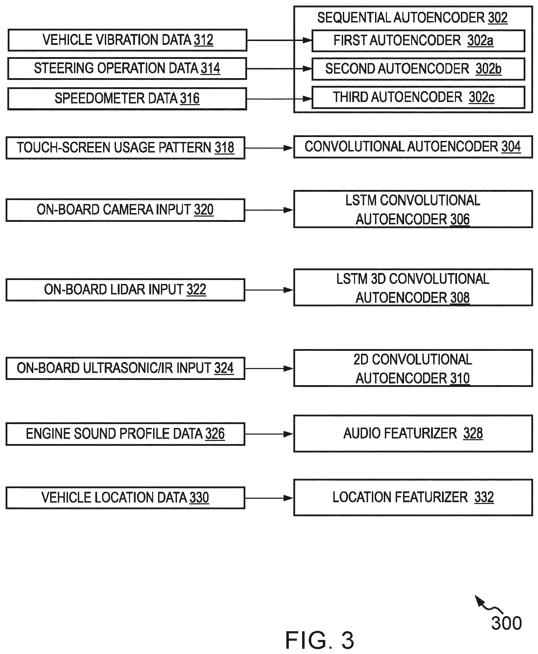

FIG. 3 is a schematic representation 300 of various authentication models with respective authentication parameters as inputs, in accordance with an example embodiment of the present disclosure.

As mentioned above, after starting a current trip, the on-board device 110 of the autonomous vehicle 104 transmits or uploads multisensory data to the server system 200 at predefined time intervals. The multisensory data may include, but not limited to, engine sound profile data, vehicle vibration data, touch screen usage patterns, steering operation patterns, vehicle location, speedometer data of vehicle, on-board camera input, on-board light ranging and detection (LIDAR) inputs, and on-board infrared (IR) inputs. The multisensory data is utilized for determining authenticity of payment transactions originated from the on-board device 110 of the autonomous vehicle 104.

In case of self-driving mode, the on-board device 110 transmits engine sound profile data, vehicle vibration data, and vehicle location data. In the case of the manual driving mode, the on-board device 110 also records and transmits data values corresponding to touch-screen usage patterns, speedometer data, on-board camera input, on-board light ranging and detection (LIDAR) inputs, on-board infrared (IR) inputs, etc.

In one embodiment, the processor 206 is configured to utilize multiple authentication models for generating a plurality of authentication features based on the plurality of authentication parameters. The authentication models include, but are not limited to, neural network models, audio and location featurizing models, etc.

Various authentication parameters provided to the respective authentication models as inputs shown in the FIG. 3 are described as below:

**Vehicle Vibration Data:** The vehicle vibration data 312 defines the characterization or identity of the autonomous vehicle 104 in which the payment transaction is taking place. The processor 206 is configured to receive vehicle vibration data 312 in form of a time-series manner that is used to train a first autoencoder 302a to learn a latent space representation of the vehicle vibration data. The first autoencoder 302a is included in a sequential autoencoder 302. The vehicle vibration data 312 is detected by vehicle vibration sensors of the autonomous vehicle 104. The first sequential autoencoder 302a is configured to identify an anomaly associated with the vehicle vibration data in the autonomous vehicle 104. The first sequential autoencoder 302a learns a compressed representation of the vehicle vibration data 312 in a time sequence format and generates latent space representations for the same.

**Steering operation and Speedometer data:** The steering operation data 314 and speedometer data 316 are provided to second and third autoencoders 302b, and 302c respectively. The second and third autoencoders are shown inside the sequential autoencoder 302 block. The steering operation data 314 includes, but is not limited to, pressure data on steering wheel, rotational angle, angular velocity, angular acceleration, and angular jerks. The second autoencoder 302b is configured to transform the steering operation data 314 into a multi-dimensional vector representation. The steering operation data 314 is learned for determining the authenticity of the user 102 when the car is the manual driving mode and the learned representations of the steering operation data 314 are used to authenticate the user 102. Similarly, the speedometer data 316 is fed to the third autoencoder 302c to transform the speedometer data 316 into latent space representations. The speedometer data 316 is also learned to authenticate the user 102 based on the speeds that the user 102 drives in while driving the autonomous vehicle 104 in manual driving mode. The speedometer data helps in characterizing driving style of the autonomous vehicle 104 and identifies whether one of genuine drivers is currently driving the autonomous vehicle 104, or not. The processor 206 is configured to discard speedometer history data when the autonomous vehicle 104 was being run the autopilot mode.

**Touch-screen usage pattern:** The convolutional autoencoder 304 is configured to extract or generate latent state vectors from the touch-screen usage pattern 318 (*i.e.,* usage of touch panel of on-board device 110 of the autonomous vehicle 104 by the user 102). The touch-screen usage pattern 318 helps in identifying the user who is carrying out the payment transaction or currently using the on-board device 110. More specifically, the convolutional AE 304 implements a neural network model that is trained on the history of the touch-screen usage pattern of the user 102. In general, the touch-screen usage pattern 318 represents the touch and motion gestures performed by the user 102 on the visual touch display of the on-board device 110. Thus, the convolutional AE 304 may determine the pressure data, and velocity of swipes from the touch, and motion gestures data respectively on the touch panel of the on-board device 110 by the user 102. In one embodiment, the convolutional AE 304 may utilize data visualization techniques (such as "Heat maps") to plot pressure data and velocity of swipe data (collectively referred as the touch-screen usage pattern) to extract features that will be utilized for authentication of the user 102.

**On-board camera input:** The LSTM convolutional autoencoder 306 is configured to detect anomalies in the driving pattern when the autonomous vehicle 104 is used in manual mode, based on the on-board camera input 320. In general, the driving pattern corresponds to data related to changing of lanes, taking turns, and the like made by the driver 102 who is driving the autonomous vehicle 104. Such data is recorded using the on-board cameras such as cameras 108 placed in the autonomous vehicle 104. More specifically, the LSTM convolutional autoencoder 306 includes neural network models that are trained based at least on a sequence of images corresponding to driving style of the driver (such as the user 102). Thus, the LSTM convolutional autoencoder 306 determines anomalies and extracts latent features from the driving pattern of the user 102 based at least on the trained sequence of images captured by the cameras 108, corresponding to the user 102 using the autonomous vehicle 104.

**On-board LIDAR input:** The LSTM 3D convolutional autoencoder 308 is configured to detect anomalies in the driving pattern based on the on-board LIDAR input 322, when the autonomous vehicle 104 is used in the manual-driving mode. The LSTM 3D convolutional autoencoder 308 is fed with a sequence of 3-dimenssional (3D) vector field representation data of the environment in which the driver 102 is driving the autonomous vehicle 104. More specifically, the LSTM 3D convolutional autoencoder 308 includes a neural network model that is trained with 3D vector representation data which corresponds to driving style/pattern of the driver such as the driver 102 throughout the usage of the autonomous vehicle 104. As such, the LSTM 3D convolutional autoencoder 308 implements a neural network model over the received 3D vector field representations to create authentication features associated with the user 102.

**On-board infrared (IR) input:** A 2-dimensional (2D) convolutional autoencoder 310 is configured to extract features from the on-board infrared (IR) input data 324 of the autonomous vehicle 104. In particular, the 2D convolutional autoencoder 310 includes a neural network model that is trained based at least on voltage levels. The voltage levels are calibrated based on distance inputs and various critical points of the autonomous vehicle 104 for efficient parking. Thus, the neural network model of the 2D convolutional autoencoder 310 is configured to normalize and/or sample the voltage values at specific time frequency when received from the autonomous vehicle 104. Therefore, sampling of voltage values at specific time frequency may be used as a feature which is utilized for identifying parking characteristics corresponding to the user 102.

**Engine sound profile data:** The engine sound profile data 326 is utilized as one of the authentication parameter for defining vehicular profile of the autonomous vehicle 104 in which the payment transaction is taking place. The engine sound profile data 326 is captured using a microphone present in a vehicle engine of the autonomous vehicle 104. Typically, engine sound profiles remain the same except for an anomaly in the vehicle engine. The engine sound profile data 326 is provided to the audio featurizer 328 for extracting audio features associated with the engine sound profile data. The processor 206 is configured to perform operations such as, audio and time-series operations, time and frequency conversion, spectrogram calculation, etc. over the engine sound signals, to generate the latent audio features.

**Vehicle location data:** The vehicle location data 330 helps in detecting anomalous locations based on the history of driving the autonomous vehicle 104. The vehicle location data 330 is provided to the location featurizer 332 that is configured to calculate a distance between two location points based on a Haversine distance function.

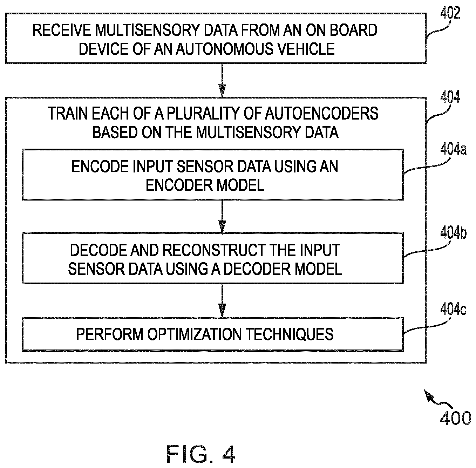

FIG. 4 illustrates a flow diagram 400 representing a process flow for training neural network models to generate authentication features, in accordance with an example embodiment. The process flow depicted in the flow diagram 400 may be performed by, for example, a server system such as the server system 200. Operations of the process flow, and combinations of operation in the method, may be implemented by, for example, hardware, firmware, a processor, circuitry and/or a different device associated with the execution of software that includes one or more computer program instructions. The process flow starts at operation 402.

As mentioned above, when an on-board device 110 of an autonomous vehicle 104 is registered as an authentication device for future payment transactions, the server system 200 starts a training process of neural network models for the autonomous vehicle 104 so that the server system 200 is able to convert a plurality of authentication parameters into a similar format (*i.e.,* latent space representation) and generate one or more authentication scores. The neural network models are referred to as a plurality of autoencoders. The plurality of autoencoders is trained based, at least, on historical multisensory data associated with one or more autonomous vehicles. The one or more autonomous vehicles are similar type of vehicles.

At the 402, the server system 200 receives multisensory data from the on-board device 110 of the autonomous vehicle 104 at predefined time-intervals. The multisensory data may include, but not limited to, engine sound profile data, vehicle vibration data, touch screen usage patterns, steering operation patterns, vehicle location, speedometer history of vehicle, on-board camera input, on-board light ranging and detection (LIDAR) inputs, and on-board infrared (IR) inputs. The on-board device 110 is configured to send the multisensory data to the server system 200 periodically. Some of the multisensory data such as steering operation pattern, on-board camera input, on-board LIDAR input, and on-board ultrasonic/IR input may be exclusive to manual driving mode and are used to learn the driving behaviors and characteristics of the user 102.

At 404, the server system 200 trains each of the plurality of autoencoders based on the multisensory data. Each autoencoder is implemented with an encoder-decoder model. The training of each autoencoder is performed at steps 404a-404c.

At 404a, the server system 200 encodes input sensor data (*e.g.,* vehicle vibration data) using an encoder model associated with an autoencoder. In particular, the server system 200 provides an input vector associated with the input sensor data to the encoder model. At 404b, the server system 200 decodes the encoded sensor data using a decoder model of the autoencoder and tries to reconstruct the input sensor data at output. At 404c, the server system 200 performs optimization technique (such as, gradient descent, backpropagation, etc.) based on a reconstruction error to adjust weights and biases of the encoder and decoder model.

Once the encoder-decoder model achieves a desired level of performance in the reconstruction of the input data, the decoder model may be removed, leaving just the encoder model. The encoder model can then be used to encode input data to a fixed-length vector. Thus, in a production phase, the autoencoder is configured to generate a latent space representation of the sensor data.

In an embodiment, the server system 200 may include a general model trained based on the authentication parameters received from one or more autonomous vehicles and multiple vehicle-specific models such as a model exclusively trained based on the authentication parameters received from the autonomous vehicle 104.

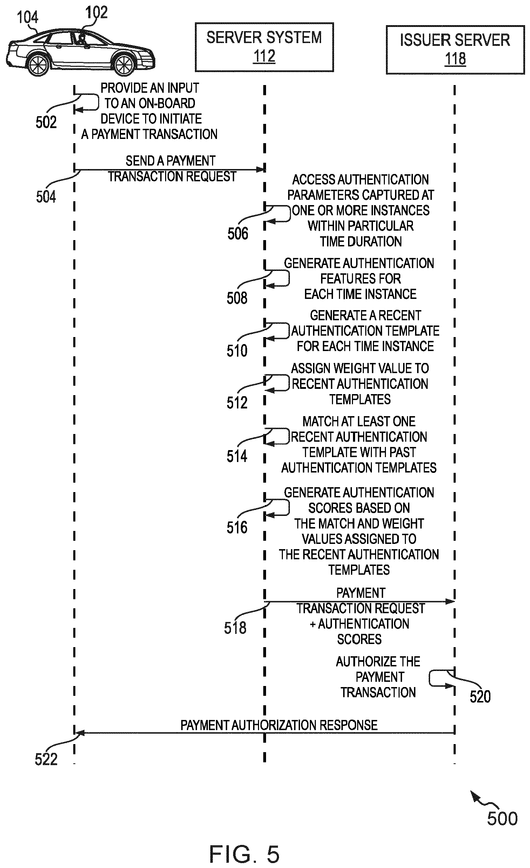

FIG. 5 is a sequence flow diagram 500 for facilitating the payment authorization for a payment transaction initiated from an autonomous vehicle 104, in accordance with an example embodiment. The sequence of operations of the sequence flow diagram 500 may not be necessarily executed in the same order as they are presented. Further, one or more operations may be grouped and performed in the form of a single step, or one operation may have several sub-steps that may be performed in parallel or in a sequential manner.

At 502, the user or the rider 102 provides an input to the on-board device 110 associated with the autonomous vehicle 104 to initiate a payment transaction for goods and services. The input may be provided via means such as, voice, tactile feedback (*i.e.,* motion gesture), or by entering a password on a touch screen of the on-board device 110.

At 504, the on-board device 110 sends a payment transaction request to the server system 200. The payment transaction request may include payment instrument identifier, receiver identifier, payment transaction amount, etc.

At 506, the server system 200 accesses a plurality of authentication parameters captured by the on-board device 110 received at one or more time instances within a particular time duration (*e.g.,* one hour) before reception of the payment transaction request. The plurality of authentication parameters may include, but are not limited to, engine sound profile data, vehicle vibration data, speedometer data, touch-screen usage pattern, on-board camera input. Some of the authentication parameters are not captured when the autonomous vehicle 104 is in self-driving mode. In one example, the server system 200 may receive the plurality of authentication parameters at three times or instances within the particular time duration.

In one embodiment, the on-board device 110 may send the payment transaction request along with the recent authentication parameters captured by the plurality of sensors to the server system 200.

At 508, the server system 200 generates a plurality of authentication features for each time instance based on the associated plurality of authentication parameters using trained neural network models, the audio featurizing model, and the location featurizing model.

At 510, the server system 200 generates a recent authentication template for each time instance by concatenating the associated plurality of authentication features. The recent authentication templates are configured to model vehicular profile, on-board device profile and user profile.

At 512, the server system 200 assigns weight values to the recent authentication templates associated with the one or more time instances based on recency. In an example embodiment, the a weight value assigned to at least one recent authentication template created at a particular time instance is inversely proportional to a difference between the particular time instance and a timestamp of initiating the payment transaction request. In one embodiment, the server system 200 may generate a single authentication template by combining the recent authentication templates based on the assigned weight values.

At 514, the server system 200 matches at least one recent authentication template with earlier or past authentication templates associated with the current trip or previous trips of the autonomous vehicle 104 stored in the database 204. The earlier or past authentication templates are generated based on authentication parameters captured at past pre-defined time intervals during the current trip or previous trips. More specifically, the vehicular profile, the on-board device profile and the user profile created based on the plurality of authentication features of the one or more time instances are compared with stored vehicular profile data, on-board device profile data and user profile data in the database 204. For example, audio features associated with the engine sound profile data created at the one or more time instances are compared with stored audio features in the database. In another example, distances between the vehicle location data captured at the one or more time instances and past stored location data are calculated using the Haversine distance function. When the distances are greater than a threshold value, an anomaly is detected.

At 516, the server system 200 generates one or more authentication scores based on the match and weight values assigned to the recent authentication templates corresponding to the particular time duration. The one or more authentication scores represent confidence scores of authenticity of the autonomous vehicle 104, the on-board device 110 and the user 102 (in case of manual driving mode). In one embodiment, the one or more authentication scores includes a first authentication score associated with the vehicular profile, a second authentication score associated with the on-board device profile, and a third authentication score associated with the user-profile.

At 518, the server system 200 sends or routes the one or more authentication scores, along with the real-time payment transaction request to an issuer server 118 associated with the user 102. The issuer server 118 associated with the user 102 may be determined based on the payment information present in the payment transaction request. In some embodiments, the server system 112 may send the one or more authentication scores along with the payment transaction request to the payment server 116 and then, the payment server 116 may send the same to the issuer server 118 for further processing such as authorization and authentication of the payment transaction request.

At 520, the issuer server 118 authorizes the payment transaction request based on the one or more authentication scores and predefined payment authorization rules. The predefined payment authorization rules may include transactional features such as, the velocity of spend, transaction velocity, etc. to assess fraud and to take authorization decisions. The issuer server 118 may include a classification model configured to classify the payment transaction request to either approve or decline, based on the one or more authentication scores and the transactional features. The classification model may be trained with threshold scores or preset conditions associated with the various profiles such as user profile, vehicular profile, and the autonomous vehicle profile. The classification model may compare the authentication scores received from the server system 200 with the threshold scores and classify the payment transaction request. In one embodiment, the server system 200 may send one authentication score, similarly, the classification model may have a single threshold score for classifying the payment transaction using the authentication score.

At 522, the issuer server 118 sends a payment authorization response message to the autonomous vehicle 104 based on the payment authorization. The payment authorization response message sent by the issuer server 118 may be displayed on the on-board device 110 to the user 102.

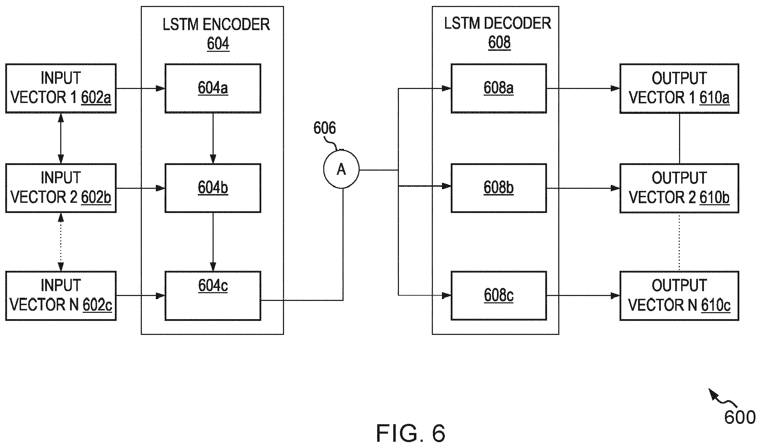

FIG. 6 is a simplified block diagram of a sequential autoencoder 600, in accordance with an example embodiment of the present disclosure. The sequential autoencoder may include a pair of LSTM encoder-decoder structure which facilitates end-to-end mapping between an ordered input sequence of authentication parameters and its matching output representations. The LSTM based sequential autoencoder 600 includes LSTM encoder model 604 and LSTM decoder model 608. Although only three unrolled LSTM encoders and decoders are shown in FIG. 6, it will be appreciated that any number of LSTM blocks may be used (e.g., corresponding to the number of authentication parameters that are selected for use).

More particularly, a series of the LSTM encoders 604a, 604b, and 604c is fed with input vectors representing authentication parameters such as vehicle vibration data, steering operation patterns, or speedometer data. The input vectors 602a, 602b, and 602c fed to the LSTM encoders 604a-604c at each time stamp are simply vectors associated with values of a particular authentication parameter at that timestamp. More specifically, a time length sequence of the authentication parameter captured by the on-board device 110 is fed to the LSTM encoders 604a-604c at the different timestamps.

Each LSTM encoder (*e.g.,* 604a, 604b, 604c) of the LSTM encoder model 604 learns a representation of a sequence of the particular authentication parameter during a particular time interval and maintains a hidden vector and a cell vector. Both the hidden vector and the cell state vector are passed to a next LSTM encoder (e.g., from LSTM encoder 604a to LSTM encoder 604b) to initialize the next/subsequent LSTM encoder's state. At the end, hidden and cell state vectors of last LSTM encoder 604c are passed to a hidden layer 606.

The encoded hidden and cell state vectors are transferred to the LSTM decoder model 608. The LSTM decoders 608a, 608b, and 608c try to reconstruct the same time-length input authentication parameter at the output. A reconstructed time-length sequence may then be compared with the original input time-length sequence by calculating a reconstruction error. The LSTM decoders 608a-608c try to reconstruct the same input vector and generate context decoder outputs 610a, 610b, and 610c, and a current decoder hidden state at each decoder time step. Further, the input and output vectors are then compared and in one example, if the LSTM decoders 608a-608c could not be able to reconstruct the input vectors of the authentication parameter, the LSTM based sequential autoencoder 600 adjusts various factors of LSTM encoders and decoders until the encoder-decoder architecture learn to regenerate the input vector as required.

In one non-limiting example, in order to configure the LSTM encoder model 604 and the LSTM decoder model 608, machine learning training techniques (e.g., using gradient descent, back propagation, etc.) can also be used. Thus, the LSTM based sequential autoencoder 600 provides a learned representation of the authentication parameter in a latent space.

In one embodiment, the LSTM based sequential autoencoder 600 is trained using time-dependent sensory data of the autonomous vehicle 104 such as the vehicle vibration data, speedometer history, steering operation patterns received at pre-defined time intervals.

Further, during the execution process, the LSTM encoders 604a-604c are configured to generate an authentication feature (*i.e.,* a latent state vector) in a latent space corresponding to an authentication parameter received at a particular time instance.

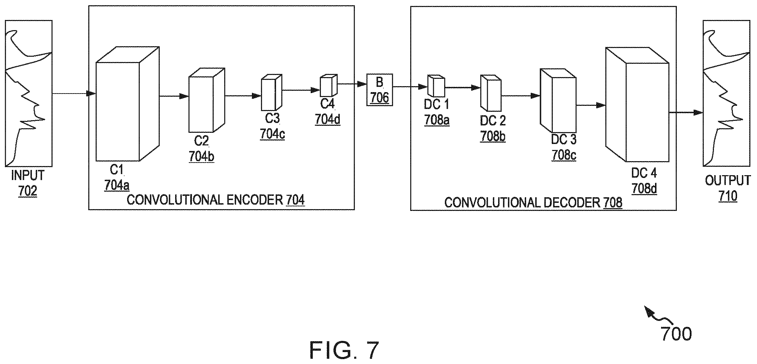

FIG. 7 represents a simplified architecture of a convolutional autoencoder 700, in accordance with an example embodiment of the present disclosure. The convolutional autoencoder 700 may include a pair of convolutional encoder-decoder structure which facilitates end-to-end mapping between the input image and an output representation of the input image. The convolutional autoencoder includes a convolutional encoder model 704 and a convolutional decoder model 708. Although only four encoder layers 704a, 704b, 704c and 704d, and four decoder layers 708a, 708b, 708c, and 708d are shown in FIG. 7, it will be appreciated that any number of convolutional encoder-decoder pairs may be used.

In general, the convolutional autoencoder 700, due to its convolutional nature, converts realistic-sized high-dimensional images into low-dimensional space.

The convolutional encoder model 704 may be constituted using filter layers for performing a process (encoding process) of forming hidden layers by compressing input data 702. The convolutional decoder model 708 may be constituted of layers for performing a process of generating output data 710 from the hidden layers, the process of which is opposite to the encoding process performed by the convolutional encoder model 704.

In an example embodiment, the convolutional encoder model 704 may include convolutional layers and pooling layers. Each convolutional layer is composed of n convolutional filters. The convolutional decoder model 708 may include upsampling layers and transposed convolutional layers. In this case, the convolutional encoder model 704 and the convolutional decoder model 708 may be connected to each other via a fully connected layer. The convolutional layer may be a layer that extracts latent features 706 (or a feature map) by performing an arithmetic multiplication (or convolution) of an input data 702 with a filter. The pooling layer is a layer for selecting features representative of a feature map by performing pooling on an extracted feature map. Max pooling for extracting the largest value from a predetermined region of the feature map and average pooling for extracting an average value from the predetermined region thereof may be performed.

The transposed convolutional layer may be a layer that, in reverse, performs the process that the convolutional layer performed in the convolutional encoder model 704. The upsampling layer may be a layer that, in reverse, performs a process of the pooling layer. When a new input data (image) corresponding to an authentication parameter related to a time stamp of the current trip is obtained as an input to the convolutional autoencoder 700, the output data (image) reconstructed by the convolutional autoencoder 700 may be distorted, depicting that there is an anomaly in the input data. Therefore, it is easy to determine anomaly in the authentication parameter using the fact that, when a new authentication parameter, which is not learned, is converted into an input image and then the input image is the output through the convolutional autoencoder, a severely distorted image is the output.

Once the convolutional filters have been learned or trained, the convolutional filters are applied to an authentication parameter (such as, touch-screen usage data) to extract latent features 706.

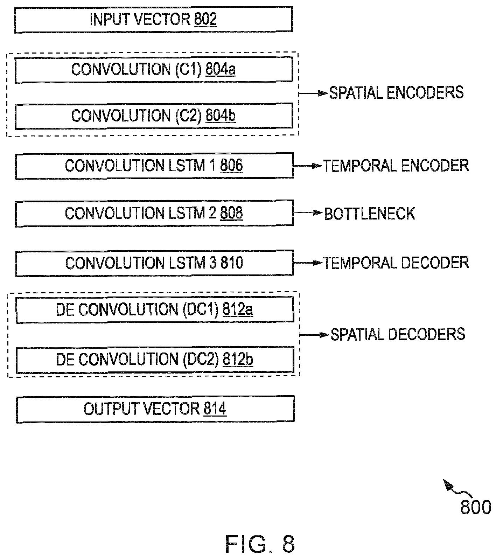

FIG. 8 is a simplified block diagram of an LSTM convolutional autoencoder 800, in accordance with an example embodiment of the present disclosure. The LSTM convolutional autoencoder 800 may include convolutional layers 804a and 804b which constitute a spatial encoder. An LSTM convolutional layer 806 may constitute a temporal encoder. Another convolutional LSTM layer 808 may constitute a bottleneck or a hidden layer that is used to learn the hidden representations in the input data 802. Further, an LSTM de-convolutional layer 810 constitutes a temporal decoder and two de-convolutional layers 812a and 812b are also shown which constitute spatial decoders. The LSTM convolutional autoencoder 800 may generate a reconstructed output 814. Although only limited number of encoder layers and decoder layers are shown in FIG. 8, it will be appreciated that any number of encoders and decoders may be used.

The LSTM convolutional autoencoder 800 is used to generate latent space representation of the on-board camera input received by one or more autonomous vehicle 104 such as the autonomous vehicle 104. Since the on-board camera inputs are videos that are in a time sequence, both spatial and temporal features should be learned for the input 802. In order to compress the spatial features of the camera input spatial encoder including convolutional layers 804a and 804b are used and the temporal features of the input 802 may be compressed using the temporal encoder including the LSTM convolutional layer 806. The encoders may compress the data to represent in a latent space and learn the hidden representations in the latent space representations. The representations may be learned by the hidden layer/bottleneck including the LSTM convolutional layer 808.

Further the learned representation by the bottleneck may be fed to a temporal decoder including another LSTM convolutional layer 810. The temporal decoder is configured to reconstruct the input 802 using the learned representation output by the LSTM convolutional layer 810. Further, the spatial decoders including de-convolutional layers 812a and 812b are configured to reconstruct the spatial features of the learned representation and an output 814 is obtained. The LSTM convolutional autoencoder 800 may is configured to learn the filters and weights to be applied at the encoders and decoders based on a reconstruction error in the reconstructed output 814. Once the LSTM convolutional autoencoder 800 being trained, the temporal and spatial encoders are configured to utilize for generating a latent space representation of authentication parameters (such as, on-board camera input).

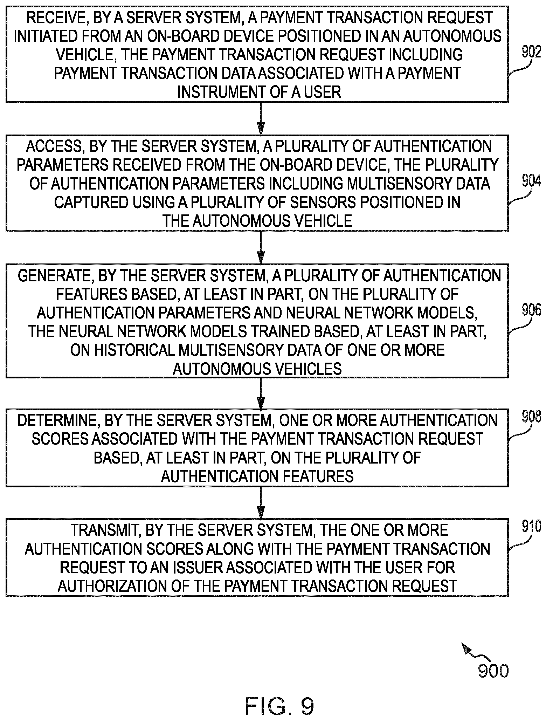

FIG 9 represents a flow diagram of a computer-implemented method 900 for generating one or more authentication scores for a payment transaction request initiated from an on-board device equipped in an autonomous vehicle, in accordance with an example embodiment of the present disclosure. The method 900 depicted in the flow diagram may be executed by the server system 112 which may be standalone server or a server as whole incorporated in the payment server 116 or an issuer server 118. Operations of the method 900, and combinations of operation in the method 900, may be implemented by, for example, hardware, firmware, a processor, circuitry and/or a different device associated with the execution of software that includes one or more computer program instructions. The method 900 starts at operation 902.

At 902, the method 900 includes receiving, by the server system 112, a payment transaction request initiated from an on-board device 110 positioned in an autonomous vehicle 104. The payment transaction request may include payment transaction data associated with a payment instrument of a user 102. The payment instrument may be payment account, payment card, payment wallet, etc.

At 904, the method 900 includes accessing, by the server system 112, a plurality of authentication parameters received from the on-board device 110 positioned in the vehicle. The plurality of authentication parameters may include multisensory data captured using a plurality of sensors 106 positioned in the autonomous vehicle 104.

At 906, the method 900 includes generating, by the server system 112, a plurality of authentication features based, at least in part, on the plurality of authentication parameters and neural network models. The neural network models may be trained based, at least in part, on historical multisensory data of one or more autonomous vehicles.

At 908, the method 900 includes determining, by the server system 112, one or more authentication scores associated with the payment transaction request based, at least in part, on the plurality of authentication features. The one or more authentication scores include a first authentication score associated with vehicular profile, a second authentication score associated with an on-board device profile, and a third authentication score associated with user profile.

At 910, the method 900 includes transmitting, by the server system 112, the one or more authentication scores along with the payment transaction request to an issuer associated with the user 102 for authorization of the payment transaction request. An issuer server 118 associated with the issuer may be configured to receive the one or more authentication scores and along with the payment transaction request and determine whether to approve or decline the payment transaction using a classification model.

The sequence of operations of the method 900 need not to be necessarily executed in the same order as they are presented. Further, one or more operations may be grouped together and performed in form of a single step, or one operation may have several sub-steps that may be performed in parallel or in sequential manner.

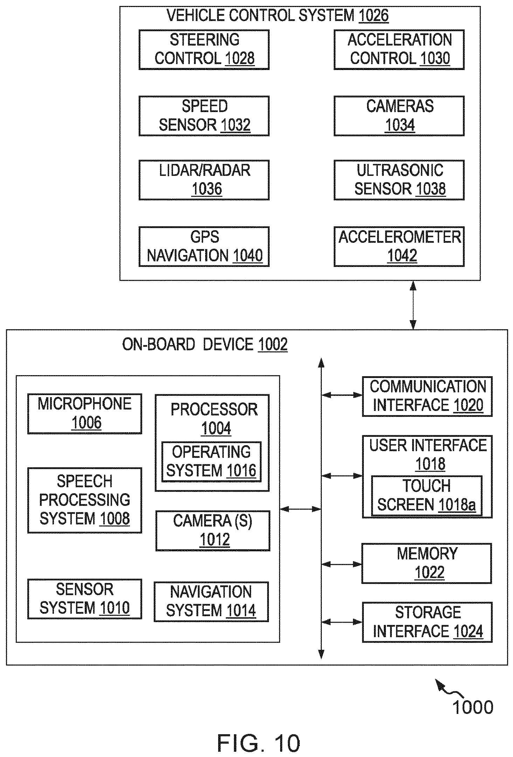

FIG. 10 shows a block diagram 1000 of an on-board device with a vehicle control system positioned in an autonomous vehicle, in accordance with an example embodiment of the present disclosure. In some examples, the on-board device 1002 may be a vehicle infotainment system configured to facilitate plurality of content (audio and/or visual media content, including entertainment content, navigational services, internet services, payment services, etc.) to a user of the vehicle such as the user 102, to enhance the user's driving and in-vehicle experience. The on-board device 1002 may include, or be coupled to, various vehicle systems, sensors, hardware components, as well as software applications and systems that are integrated in, vehicle such as the autonomous vehicle 104 in order to enhance an in-vehicle experience for a driver and/or a passenger.

The on-board device 1002 may include a processor 1004, a microphone 1006, a speech processing system 1008, a sensor system 1010, cameras 1012, and a navigation system 1014. The processor 1004 may include an operating system 1016 which may be configured to execute an operating system on the on-board device 1002, and control input/output, display, playback, and other operations of the on-board device 1002. A user interface 1018 including a touch screen 1018a may interface with the on-board device 1002 via a communication interface 1020. The on-board device 1002 may also include a memory 1022 and a storage interface 1024 which is configured to communicate with external databases such as the database 120 of FIG. 1.

The on-board device 1002 may be in continuous communication with the vehicle control system 1026. The vehicle control system may include a plurality of components such as steering control 1028, acceleration control 1030, speed sensor 1032, cameras 1034, LIDAR/RADAR 1036, ultrasonic sensor 1038, GPS navigation 1040 and an accelerometer 1042. The various sensors and systems in the vehicle control system 1026 may be in continuous communication with the on-board device 1002 via the communication interface 1020.

The on-board device 1002 may be configured to receive and send a plurality of data from and to the vehicle control system 1026. The vehicle control system 1026 is configured to send a plurality of vehicle data outputs. The vehicle data outputs may include, for example, the engine sound data, vehicle vibration data, GPS data of the vehicle, steering patterns, ultrasonic inputs, accelerometer sensor inputs, LIDAR/RADAR inputs, etc. For example, the on-board device 1002 may retrieve from the vehicle control system 1026, the current speed of the vehicle estimated by the speed sensors 1032, a power state of the vehicle via a battery and/or power distribution system of the vehicle, an ignition state of the vehicle, etc. In addition, other interfacing means such as Bluetooth, or Wi-Fi may be used as well without deviating from the scope of this disclosure.

A non-volatile memory such as the storage interface 1024 may be included in on-board device 1002 to store executable instructions that may be executed by processor 1004. The storage interface 1024 may store application data to enable the on-board device 1002 to run an application for connecting to a cloud-based server or a database and/or sending information to the cloud-based server or the database. The application may retrieve information gathered by vehicle systems/sensors, input devices (*e.g.,* user interface 1018), devices in communication with the on-board device 1002 (*e.g.,* a mobile device connected via a Bluetooth link), etc. The on-board device 1002 may further include a volatile memory 1022. The memory 1022 may be random access memory (RAM). Non-transitory storage devices, such as memory 1022 and/or storage interface 1024, may store instructions and/or code that, when executed by a processor (*e.g.,* processor 1004), controls the on-board device 1002 to perform one or more of the actions.

A microphone 1006 may be included in the on-board device 1002 to receive voice commands from a user, to measure engine sound of the vehicle, etc. A speech processing system 1008 may process voice commands, such as the voice commands received from the microphone 1006. In some embodiments, the on-board device 1002 may also be able to receive voice commands and sample ambient vehicle noise using a microphone included in an audio system equipped in the autonomous vehicle 104.

One or more sensors may be included in a sensor system 1010 of the on-board device 1002. For example, the sensor system 1010 may include a touch sensor that may detect the usage of the touch screen 1018a by the user 102. The sensor system 1010 of the on-board device 1002 may communicate with and receive inputs from various vehicle sensors and may further receive user inputs. For example, the inputs received by sensor system 1010 may include transmission gear position, transmission clutch position, gas pedal input, brake input, transmission selector position, vehicle speed, engine speed, mass airflow through the engine, ambient temperature, intake air temperature, etc., as well as inputs from climate control system sensors, an audio sensor detecting voice commands issued by a user, a fob sensor receiving commands from and optionally tracking the geographic location/proximity of a fob of the vehicle, etc. While certain vehicle system sensors may communicate with the sensor system 1010 alone, other sensors may communicate with both the sensor system 1010 and vehicle control system 1026, or may communicate with the sensor system 1010 indirectly via vehicle control system 1026. A navigation system 1014 of the on-board device 1002 may generate and/or receive navigation information such as location information (*e.g.,* via a GPS sensor and/or other sensors from sensor system 1010), route guidance, traffic information, and/or provide other navigational services for the driver.

The vehicle control system 1026 may include a plurality of components capable of recoding a plurality of data required for enabling a plurality of operations of the server system 112. The components of the vehicle control system 1026 may be in communication with a database or the on-board device 1002. The components may be capable of capturing a plurality of multisensory data such as the speedometer data, LIDAR input, location data, camera data, etc. The multisensory data captured using the plurality of components such as the steering control 1028, acceleration control 1030, speed sensor 1032, cameras 1034, LIDAR/RADAR 1036, ultrasonic sensor 1038, GPS navigation 1040 and an accelerometer 1042 may be configured to continuously capture the telematics, visual and audio data and send it to a database or the on-board device 1002. The multisensory data may be utilized as authentication parameters for authorizing a payment transaction request initiated from the on-board device 1002.

One or more elements of the on-board device 1002 may be controlled by a user via user interface 1018. The user interface 1018 may include a graphical user interface presented on a touch screen 1018a and/or user-actuated buttons, switches, knobs, dials, sliders, etc. For example, user-actuated elements may include steering wheel controls, door and/or window controls, instrument panel controls, audio system settings, climate control system settings, and the like. A user may also interact with one or more applications of the on-board device 1002 via user interface 1018. Notifications and other messages (e.g., payment status message), as well as navigational assistance, may be displayed to the user on a display of the user interface 1018. User preferences/information and/or responses to presented messages may be performed via user input to the user interface.

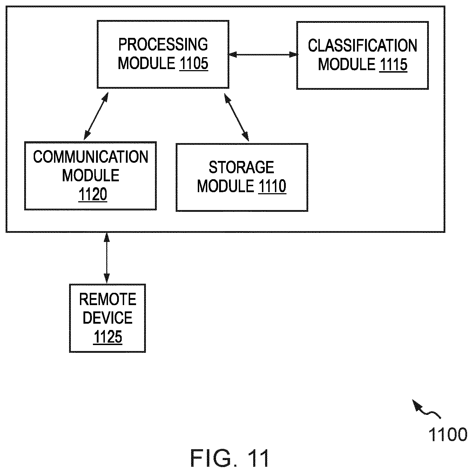

FIG. 11 is a simplified block diagram of an issuer server, in accordance with one embodiment of the present disclosure. The issuer server 1100 is an example of the issuer server 118 of FIG. 1. The issuer server 1100 is associated with an issuer bank/issuer, in which a user 102 may have an account, which enables the user 102 to perform payment transactions using the on-board device 110 of the autonomous vehicle 104.

The issuer server 1100 includes a processing module 1105 operatively coupled to a storage module 1110, a classification module 1115, and a communication module 1120. The components of the issuer server 1100 provided herein may not be exhaustive, and that the issuer server 1100 may include more or fewer components than that of depicted in FIG. 11. Further, two or more components may be embodied in one single component, and/or one component may be configured using multiple sub-components to achieve the desired functionalities. Some components of the issuer server 1100 may be configured using hardware elements, software elements, firmware elements, and/or a combination thereof.

The storage module 1110 is configured to store machine executable instructions to be accessed by the processing module 1105. Additionally, the storage module 1110 stores information related to the user (*i.e.,* the user 112) such as, contact information of the customer, payment account number (PAN), BINs, payment card details, internet banking information, PIN, mobile personal identification number (MPIN) for mobile banking, and the like. This information is retrieved by the processing module 1105 for cross-verification during the processing of the payment transaction request initiated by the user 102 via the on-board device 110 of the autonomous vehicle 104. In one embodiment, the storage module 1110 may also receive the corresponding profiles of the user 102, the on-board device 110, and the autonomous vehicle 104 for storage.

The processing module 1105 is configured to communicate with one or more remote devices such as a remote device 1125 using the communication module 1120 over a network such as the network 122 or the payment network 114 of FIG. 1. The examples of the remote device 1125 include the payment server 116, the acquirer server, the server system 200, the autonomous vehicle 104, or any other computing systems of the payment network 114 and the like. The communication module 1120 is capable of facilitating such operative communication with the remote devices using API (Application Program Interface) calls.

The classification module 1115 is configured to classify the payment transaction upon the receipt of the payment transaction request along with the one or more authentication scores from the server system 200. The classification module 1115 may be trained based on a machine learning algorithm to classify the payment transaction to either approve or decline the payment transaction based on the one or more authentication scores and transactional features (such as, transaction velocity, spend velocity, etc.). Thus, the classification module 1115 may either approve or decline the payment transaction upon the receipt of one or more authentication scores. For instance, if the one or more authentication scores pertaining to the identity of the user 102, the autonomous vehicle 104, and the on-board device 110 exceed a threshold value, the classification module 1115 confirms that the payment transaction request is initiated by an authentic and/or authorized user (*i.e.,* the user 102) using the on-board device 110 of the autonomous vehicle 104. In one embodiment, the threshold values of the corresponding authentication scores may be predefined by the issuer server 118 or the server system 200 and transferred to the issuer server 118 for storage.

In one embodiment, the issuer server 1100 may also perform similar operations as performed by the server system 200 for generating the one or more authentication scores upon receipt of the payment transaction request.

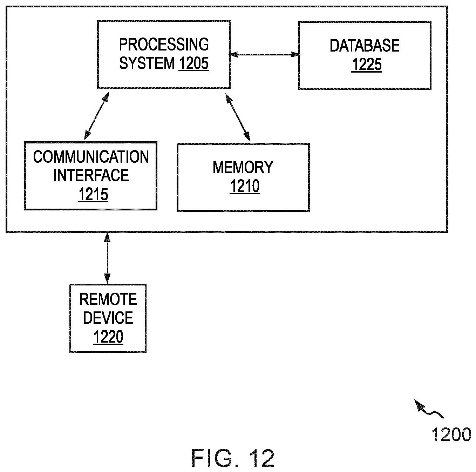

FIG. 12 is a simplified block diagram of a payment server 1200, in accordance with one embodiment of the present disclosure. The payment server 1200 is an example of the payment server 116 of FIG. 1. In one embodiment, the payment server 1200 may be embodied in the payment network, such as the payment network 114 of FIG. 1. The payment network 114 may be used by the payment server 1200, the issuer server 118 and an acquirer server as a payment interchange network. Examples of payment interchange network include, but not limited to, Mastercard^{®} payment system interchange network. The payment server 1200 includes a processing system 1205 configured to extract programming instructions from a memory 1210 to provide various features of the present disclosure. The components of the payment server 1200 provided herein may not be exhaustive and that the payment server 1200 may include more or fewer components than that of depicted in FIG. 12. Further, two or more components may be embodied in one single component, and/or one component may be configured using multiple sub-components to achieve the desired functionalities. Some components of the payment server 1200 may be configured using hardware elements, software elements, firmware elements and/or a combination thereof.

Via a communication interface 1215, the processing system 1205 receives information from a remote device 1220 such as the server system 200, the autonomous vehicle 104, the issuer server 1100, or the acquirer server. The payment server 1200 includes a database 1225. The database 1225 may include at least the user specific profile, the on-board device specific profile, and the vehicular specific profile. Further, the payment server 1200 may also perform similar operations as performed by the server system 200 for generating the authentication scores upon receipt of the payment transaction request from an on-board device of the autonomous vehicle 104. For the sake of brevity, the detailed explanation of the payment server 1200 is omitted herein with reference to the FIGS. 1 and 2.

Various embodiments of the invention, as discussed above, may be practiced with steps and/or operations in a different order, and/or with hardware elements in configurations, which are different than those which are disclosed. Therefore, although the invention has been described based upon these exemplary embodiments, it is noted that certain modifications, variations, and alternative constructions may be apparent and well within the spirit and scope of the invention.

Although various exemplary embodiments of the invention are described herein in a language specific to structural features and/or methodological acts, the subject matter defined in the appended claims is not necessarily limited to the specific features or acts described above. Rather, the specific features and acts described above are disclosed as exemplary forms of implementing the claims.

## Claims

1. A computer-implemented method comprising:
receiving, by a server system, a payment transaction request initiated from an on-board device positioned in an autonomous vehicle, the payment transaction request comprising payment transaction data associated with a payment instrument of a user;
accessing, by the server system, a plurality of authentication parameters received from the on-board device, the plurality of authentication parameters comprising multisensory data captured using a plurality of sensors positioned in the autonomous vehicle;
generating, by the server system, a plurality of authentication features based, at least in part, on the plurality of authentication parameters and neural network models, the neural network models trained based, at least in part, on historical multisensory data of one or more autonomous vehicles;
determining, by the server system, one or more authentication scores associated with the payment transaction request based, at least in part, on the plurality of authentication features; and
transmitting, by the server system, the one or more authentication scores along with the payment transaction request to an issuer associated with the user for authorization of the payment transaction request.

2. The computer-implemented method as claimed in claim 1, wherein the plurality of authentication parameters is captured by the on-board device at one or more time instances within a particular time duration, and wherein the plurality of authentication parameters comprises engine sound profile data, vehicle vibration data, touch-screen usage pattern, steering operation patterns, vehicle location data, speedometer data, and on-board camera input.

3. The computer-implemented method as claimed in claim 2, wherein, for each time instance, generating the plurality of authentication features comprises determining latent space representations of the plurality of authentication parameters associated with each time instance based at least on the neural network models, and audio and location featurizing models.

4. The computer-implemented method as claimed in claim 3, wherein the neural network models comprise a plurality of autoencoders trained to generate the latent space representations associated with the plurality of authentication parameters.

5. The computer-implemented method as claimed in claim 2, wherein determining the one or more authentication scores comprises:
matching, by the server system, at least one recent authentication template with a past authentication template associated with the autonomous vehicle stored in a database, wherein the at least one recent authentication template is generated based on the plurality of authentication features, and
generating, by the server system, the one or more authentication scores based at least on the matching step and a weight value associated with the at least one recent authentication template.

6. The computer-implemented method as claimed in claim 4, wherein the one or more authentication scores include a first authentication score associated with a vehicular profile, a second authentication score associated with an on-board device profile, and a third authentication score associated with a user profile.

7. The computer-implemented method as claimed in claim 4, wherein the weight value is assigned to the at least one recent authentication template created at a particular time instance, and wherein the weight value is inversely proportional to a difference between the particular time instance and a timestamp of initiating the payment transaction request.

8. The computer-implemented method as claimed in claim 4, further comprising:
extracting, by the server system, audio features from the engine sound profile data of the autonomous vehicle using the audio featurizing model;
determining, by the server system, an anomaly in the vehicle location data based at least on a Haversine distance function;
generating, by the server system, a latent space vector associated with the vehicle vibration data by applying a sequential autoencoder of the plurality of autoencoders over the vehicle vibration data; and
generating, by the server system, a latent space vector associated with the touch-screen usage pattern by applying a convolutional autoencoder of the plurality of autoencoders over the touch-screen usage pattern data.

9. The computer-implemented method as claimed in claim 1, wherein the server system is a payment server associated with a payment network.

10. A server system configured to perform the computer-implemented method as claimed in claims 1-9.
